(19) Europäisches Patentamt
European Patent Office
Office européen des brevets

(11) Veröffentlichungsnummer : **0 010 159**
**B1**

# (12) EUROPÄISCHE PATENTSCHRIFT

(45) Veröffentlichungstag der Patentschrift : **30.09.81**

(51) Int. Cl.³ : **A 01 N 47/30** // (A01N47/30, 43/56)

(21) Anmeldenummer : **79103436.6**

(22) Anmeldetag : **14.09.79**

(54) **Mittel zur selektiven Unkrautbekämpfung basierend auf einem substituierten Harnstoff und einem Halogenacetanilid sowie die Verwendung dieser Wirkstoffkombination.**

(30) Priorität : **27.09.78 DE 2842003**

(43) Veröffentlichungstag der Anmeldung : **30.04.80 (Patentblatt 80/09)**

(45) Bekanntmachung des Hinweises auf die Patenterteilung : **30.09.81 Patentblatt 81/39**

(84) Benannte Vertragsstaaten : **BE CH DE FR GB IT NL**

(56) Entgegenhaltungen :
**FR - A - 2 368 476**
**FR - A - 2 379 525**

(73) Patentinhaber : **BAYER AG**
**Zentralbereich Patente, Marken und Lizenzen**
**D-5090 Leverkusen 1, Bayerwerk (DE)**

(72) Erfinder : **Schmidt, Robert Rudolf, Dr.**
**Hahnenweg 5**
**D-5000 Köln 80 (DE)**
Erfinder : **Thomas, Rudolf, Dr.**
**Wilkhauser Strasse 129**
**D-5600 Wuppertal 2 (DE)**

**EP 0 010 159 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Mittel zur selektiven Unkrautbekämpfung basierend auf einem substituierten Harnstoff und einem Halogenacetanilid sowie die Verwendung dieser Wirkstoffkombinationen

Die vorliegende Erfindung betrifft neue Wirkstoffkombinationen, die aus dem bekannten 3-(3,4-Dichlorophenyl)-1,1-dimethylharnstoff einerseits und aus einem bekannten N-substituierten Halogenacetanilid andererseits bestehen, und besonders gut zur selektiven Unkrautbekämpfung in Nutzpflanzenkulturen geeignet sind.

Es ist bereits bekannt geworden, daß 3-(3,4-Dichlorphenyl)-1,1-dimethylharnstoff herbizide Eigenschaften aufweist (vgl. US-PS 2 655 447). So kann dieser Wirkstoff z.B. zur selektiven Unkrautbekämpfung in Baumwolle eingesetzt werden. Nachteilig ist jedoch, daß nicht immer alle vorkommenden Unkräuter und Unkräser voll erfaßt werden.

Weiterhin ist bekannt geworden, daß bestimmte N-substituierte Halogenacetanilide, wie z.B. 2-Methyl-6-ethyl-N-(pyrazol-1-yl-methyl)-chloracetanilid, als Herbizide geeignet sind (vgl. DE-OS 2 648 008 und DE-OS 2 704 281). Diese Substanzen sind hauptsächlich gegen Schadgräser wie Avena fatua, Alopecurus, Digitaria, Echinochloa, Panicum, Setaria und andere wirksam. Sie können zur selektiven Unkrautbekämpfung unter anderem auch in Baumwolle eingesetzt werden. Bei höheren Dosierungen treten jedoch z.B. bei Baumwolle Unverträglichkeitssymptome auf.

Es wurde nun gefunden, daß die neuen Wirkstoffkombinationen aus

— 3-(3,4-Dichlorphenyl)-1,1-dimethylharnstoff der Formel

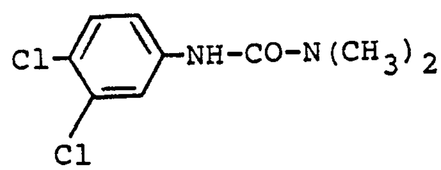

(I)

und

— dem N-substituierten Halogenacetanilid der Formel

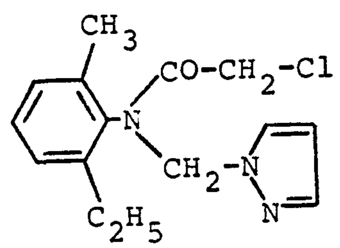

(II)

eine besonders hohe selektive herbizide Wirksamkeit aufweisen.

Überraschenderweise ist die herbizide Wirksamkeit der erfindungsgemäßen Wirkstoffkombinationen wesentlich höher als die Summe der Wirkungen der einzelnen Wirkstoffe. Es liegt also ein nicht vorhersehbarer synergistischer Effekt vor und nicht nur eine Wirkungsergänzung.

Besonders überraschend ist außerdem, daß die Pflanzenverträglichkeit der erfindungsgemäßen Wirkstoffkombinationen wesentlich günstiger ist als diejenige des N-substituierten Halogenacetanilides der Formel (II). Der 3-(3,4-Dichlorphenyl)-1,1-dimethylharnstoff der Formel (I) wirkt somit auch als « Gegenmittel » für das N-substituierte Halogenacetanilid der Formel (II). — Die erfindungsgemäßen Wirkstoffkombinationen stellen daher eine wertvolle Bereicherung der Technik dar.

Unter einem « Gegenmittel » (« Safner », « Antidot ») ist im vorliegenden Zusammenhang ein Stoff zu verstehen, welcher in der Lage ist, schädigende Wirkungen von Herbiziden auf Kulturpflanzen spezifisch zu antagonisieren, d.h. die Kulturpflanzen zu schützen, ohne die Herbizidwirkung zu vermindern.

Die in den erfindungsgemäßen Wirkstoffkombinationen enthaltenen Wirkstoffe sind bereits bekannt (vgl. US-PS 2 655 447, DE-OS 2 648 008 und DE-OS 2 704 281).

Der synergistische Effekt und die gute Pflanzenverträglichkeit der erfindungsgemäßen Wirkstoffkombinationen zeigt sich besonders dann, wenn die Wirkstoffe der Formeln (I) und (II) in bestimmten Gewichtsverhältnissen vorhanden sind. Jedoch können die Gewichtsverhältnisse der Wirkstoffe in den Wirkstoffkombinationen in relativ großen Bereichen schwanken. Im allgemeinen entfallen auf 1 Gewichtsteil an Wirkstoff der Formel (I) 0,1 bis 10 Gewichtsteile, vorzugsweise 0,5 bis 5 Gewichtsteile an Wirkstoff der Formel (II).

Die erfindungsgemäßen Wirkstoffkombinationen zeigen eine sehr gute Wirkung gegen Unkräuter und Ungräser in Nutzpflanzenkulturen. Unter Unkräutern und Ungräsern im weitesten Sinne sind alle Pflanzen zu verstehen, die an Orten wachsen, wo sie unerwünscht sind.

Die erfindungsgemäßen Wirkstoffkombinationen können z.B. bei den folgenden Pflanzen verwendet werden :

*Dikotyle Unkräuter der Gattungen :* Sinapis, Ledidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

*Dicotyle Kulturen der Gattungen :* Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita.

*Monokotyle Unkräuter der Gattungen :* Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monocharia, Fimbristylis, Sagittaria, Eleocharis, Scirpus, Paspalum, Ischaemum, Sphenoclea, Dactyloctenium, Agrostis, Alopecurus, Apera.

*Monokotyle Kulturen der Gattungen :* Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäßen Wirkstoffkombinationen zeigen insbesondere neben einer sehr guten Wirkung gegen grasartige Unkräuter auch eine gute herbizide Wirkung bei breitblättrigen Unkräutern. Ein Einsatz der erfindungsgemäßen Wirkstoffkombinationen zur selektiven Unkrautbekämpfung ist vorzugsweise möglich in Mais, Erdnüssen, Rüben, Sojabohnen, Reis und anderen Getreidearten und insbesondere in Baumwolle.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe, Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln, und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage : Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser.

Als feste Trägerstoffe kommen in Frage : z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier- und/oder schaumerzeugende Mittel Kommen in Frage : z.B. nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweißhydrolysate ; als Dispergiermittel kommen in Frage : z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können als solche oder in ihren Formulierungen auch in Mischung mit bekannten Herbiziden zur Unkrautbekämpfung Verwendung finden, wobei Fertigformulierung oder Tankmischung möglich ist. Auch eine Mischung mit anderen bekannten Wirkstoffen, wie Fungiziden, Insektiziden, Akariziden, Nematiziden, Schutzstoffen gegen Volgelfraß, Wuchsstoffen, Pflanzennährstoffen und Bodenstrukturverbesserungsmitteln ist möglich.

Die Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffkombinationen können sowohl vor als auch nach dem Auflaufen der Pflanzen appliziert werden. Die Anwendung wird vorzugsweise vor dem Auflaufen der Pflanzen, also

im pre-emergence-Verfahren, vorgenommen. Sie können auch vor der Saat in den Boden eingearbeitet werden.

Die aufgewandte Wirkstoffmenge kann in größeren Bereichen schwanken. Sie hängt im wesentlichen von der Art des gewünschten Effekts ab. Im allgemeinen liegen die Aufwandmengen zwischen 0,05 und 10 kg Wirkstoff pro ha, vorzugsweise zwischen 0,1 und 5 kg/ha.

Die gute herbizide Wirkung der erfindungsgemäßen Wirkstoffkombinationen geht aus dem nachfolgenden Beispiel hervor. Während die einzelnen Wirkstoffe in der herbiziden Wirkung Schwächen aufweisen, zeigt die Kombination eine Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzeln applizierten Wirkstoffe.

Die zu erwartende Wirkung für eine gegebene Kombination zweier Herbizide kann (vgl. Colby, S.R., « Calculating synergistic and antagonistic responses of herbicide combinations », Weeds 15, Seiten 20-22, 1967) wie folgt berechnet werden :

Wenn X = % Schädigung durch Herbizid A und p kg/ha Aufwandmenge
und Y = % Schädigung durch Herbizid B bei q kg/ha Aufwandmenge
und E = die erwartete Schädigung der Herbizide A und B bei p und q kg/ha Aufwandmenge,
dann ist $E = X + Y - \frac{X.Y.}{100}$

Ist die tatsächliche Schädigung größer als berechnet, so ist die Kombination in ihrer Wirkung überadditiv, das heißt es liegt ein synergistischer Effekt vor.

Aus der Tabelle des Beispiels A geht eindeutig hervor, daß die gefundene herbizide Wirkung der erfindungsgemäßen Wirkstoffkombination bei den Unkräutern größer ist als die berechnete, d.h. es liegt ein echter synergistischer Effekt vor.

## Beispiel A

Pre-emergence-Test

Lösungsmittel: 5 Gewichtsteile Aceton
Emulgator: 1 Gewichtsteil Alkylarylpolyglycoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten :

0 % = keine Wirkung (wie unbehandelte Kontrolle)
100 % = totale Vernichtung

Wirkstoffe, Aufwandmengen und Resultate gehen aus der nachfolgenden Tabelle hervor.

Tabelle A

Pre-emergence-Test

| Wirkstoff bzw. Wirkstoff-kombination | Wirkstoff-aufwand kg/ha | Baumwolle gef.+) | Baumwolle ber.+) | Amaranthus gef. | Amaranthus ber. | Echinochloa gef. | Echinochloa ber. |
|---|---|---|---|---|---|---|---|
| (II) (bekannt) | 2 | 30 | | 80 | | 90 | |
| (I) (bekannt) | 1 | 0 | | 70 | | 10 | |
| (II) + (I) (erfindungsgemäß) | 2 + 1 | 0 | 30 | 100 | 94 | 100 | 91 |

+) gef. = gefundene Schädigung

+) ber. = nach der auf Seite 10 angegebenen Formel berechnete Schädigung

(II) = 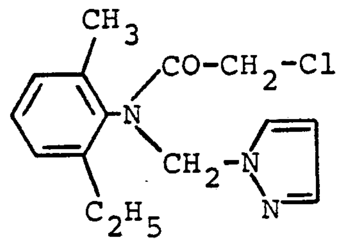

**Ansprüche**

1. Herbizide Mittel zur selektiven Unkrautbekämpfung in Nutzpflanzenkulturen, gekennzeichnet durch einen Gehalt an einer Wirkstoffkombination bestehend aus

— 3-(3,4-Dichlorphenyl)-1,1-dimethylharnstoff der Formel

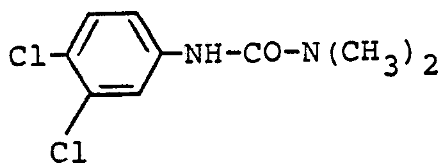

(I)

und

— dem N-substituierten Halogenacetanilid der Formel

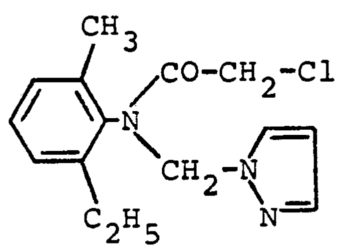

(II)

2. Mittel gemäß Anspruch 1, dadurch gekennzeichnet, daß in den Wirkstoffkombinationen das Gewichtsverhältnis von Wirkstoff der Formel (I) zu Wirkstoff der Formel (II) zwischen 1 : 0,1 und 1 : 10, vorzugsweise zwischen 1 : 0,5 und 1 : 5 liegt.

3. Verwendung von Wirkstoffkombinationen gemäß Anspruch 1 oder 2 zur selektiven Unkrautbekämpfung in Nutzpflanzenkulturen.

**Claims**

1. Herbicidal agents for selectively combating weeds in crops of useful plants, characterised in that they contain an active compound combination consisting of 3-(3,4-dichlorophenyl)-1,1-dimethylurea of the formula

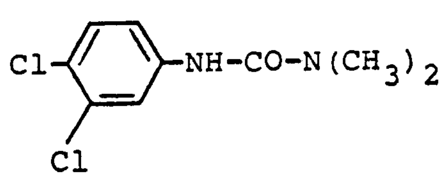

(I)

and the N-substituted halogenoacetanilide of the formula

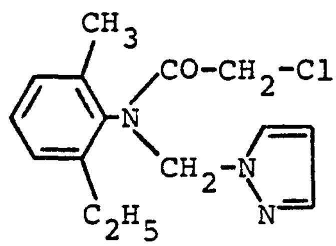

(II)

2. Agents according to Claim 1, characterised in that the weight ratio of active compound of the formula (I) to active compound of the formula (II) in the active compound combinations is between 1 : 0.1 and 1 : 10, preferably between 1 : 0.5 and 1 : 5.

3. Use of active compound combinations according to Claim 1 or 2 for selectively combating weeds in crops of useful plants.

**Revendications**

1. Produit herbicide pour la lutte sélective contre les mauvaises herbes dans les cultures de végétaux utiles, caractérisé en ce qu'il contient une combinaison de substances actives consistant en :
la 3-(3,4-dichlorophényl)-1,1-diméthylurée de formule

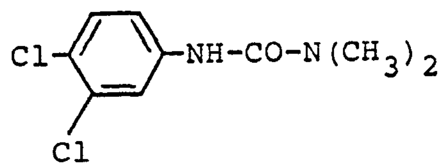

(I)

et l'halogénoacétanilide substitué à l'azote de formule

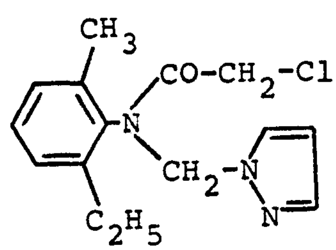

(II)

2. Produit selon la revendication 1, caractérisé en ce que, dans la combinaison de substances actives, les proportions relatives en poids entre la substance active de formule I et la substance active de formule II vont de 1 : 0,1 à 1 : 10, de préférence de 1 : 0,5 à 1 : 5.

3. Utilisation des combinaisons de substances actives selon la revendication 1 ou 2 pour lutter sélectivement contre les mauvaises herbes dans les cultures de végétaux utiles.